(19) Europäisches Patentamt
European Patent Office
Office européen des brevets

(11) **EP 3 040 966 A2**

(12) **EUROPEAN PATENT APPLICATION**

(43) Date of publication:
**06.07.2016 Bulletin 2016/27**

(51) Int Cl.:
***G09G 3/20*** (2006.01)

(21) Application number: **15203128.2**

(22) Date of filing: **30.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.01.2015 CN 201510004915
13.01.2015 CN 201510017054**

(71) Applicant: **Xiaomi Inc.
Beijing 100085 (CN)**

(72) Inventors:
• **LIU, Anyu**
  **100085 Haidian District (CN)**
• **JI, Chuanshun**
  **100085 Haidian District (CN)**
• **LI, Guosheng**
  **100085 Haidian District (CN)**

(74) Representative: **Sadler, Peter Frederick
Reddie & Grose LLP
16 Theobalds Road
London WC1X 8PL (GB)**

(54) **LIQUID CRYSTAL DISPLAY COLOR ADJUSTMENT METHOD AND DEVICE**

(57)    The present disclosure relates to a color adjustment method, a color adjustment device and a liquid crystal display. The color adjustment method comprises: obtaining a current color gamut mode of a pixel; transferring the current color gamut mode of the pixel to a preset color gamut mode, so as to obtain a blue component of the pixel in the preset color gamut mode; and performing a weakening regulation on the blue component of the pixel in the preset color gamut mode.

Fig. 1

**Description**

**FIELD**

The present disclosure relates to optical technology, and more particularly to a color adjustment method, a color adjustment device and a liquid crystal display.

**BACKGROUND**

Liquid crystal displays display images by filling liquid crystal material between two parallel plates and changing an arrangement of molecules inside the liquid crystal material via voltages, such that light shading and transmitting may be achieved, thus displaying well-arranged images with various shades. A light source of the screen is white light emitted from a LED (light-emitting diode) tube. The white light consists of visible light with various wavelengths. The visible light (according to average features of human eyes, 380-780 nm) is a small fraction of the electromagnetic spectrum, which may be sensed by human eyes in a space filled with various electron waves. While looking at the liquid crystal display for a long time, visual fatigue or even damage may occur in human eyes, mostly likely due to blue light or ultraviolet radiation.

**SUMMARY**

The present disclosure provides a color adjustment method, a color adjustment device and a liquid crystal display.

According to embodiments of a first aspect of the present disclosure, a color adjustment method is provided, and the method comprises:

obtaining a current color gamut mode of a pixel;
transferring the current color gamut mode of the pixel to a preset color gamut mode, so as to obtain a blue component of the pixel in the preset color gamut mode; and
performing a weakening regulation on the blue component of the pixel in the preset color gamut mode.

Optionally, transferring the current color gamut mode of the pixel to the preset color gamut mode so as to obtain the blue component of the pixel in the preset color gamut mode comprises:

performing a non-linear correction on the blue component of the pixel in the current color gamut mode according to preset formulas, so as to obtain the blue component of the pixel in the preset color gamut mode, in which the preset formulas comprise:

if $C_{sB}$ is greater than a first preset value, $C_{sB} = (1 + a)\cdot C_{IB}^{1/x}$; and
if $C_{sB}$ is less than or equal to the first preset value, $C_{sB} = b\cdot C_{IB}$;
where, $C_{IB}$ is the blue component of the pixel in the current color gamut mode, $0 \leq C_{IB} \leq 1$; $C_{sB}$ is the blue component of the pixel in the preset color gamut mode, $0 \leq C_{sB} \leq 1$; $a$ is a first preset non-linear correction weight, $b$ is a second preset non-linear correction weight; x is a first gamma value of the non-linear correction.

Optionally, performing the weakening regulation on the blue component of the pixel in the preset color gamut mode comprises:

if the blue component $C_{sB}$ of the pixel in the preset color gamut mode is greater than the first preset value, adjusting the first preset non-linear correction weight $a$ to about zero.

Optionally, the color adjustment method further comprises:

performing a non-linear correction respectively on a red component and a green component of the pixel in the current color gamut mode according to preset formulas, so as to obtain the red component and the green component of the pixel in the preset color gamut mode, in which the preset formulas comprise:

if $C_{sRG}$ is greater than the first preset value, $C_{sRG} = (1 + a')\cdot C_{IRG}^{1/y}$; and
if $C_{sRG}$ is less than or equal to the first preset value, $C_{sRG} = b'\cdot C_{IRG}$;
where, $C_{IRG}$ is the red component or green component of the pixel in the current color gamut mode, $0 \leq C_{IRG}$

$\leq 1$; $C_{sRG}$ is the red component or green component of the pixel in the preset color gamut mode, $0 \leq C_{sRG} \leq 1$; a' is a third preset non-linear correction weight, b' is a fourth preset non-linear correction weight; y is a second gamma value of the non-linear correction, and $y < x$.

Optionally, the color adjustment method comprises:

obtaining mapping parameters for three-primary colors of the pixel;
mapping the three-primary colors of the pixel to new three-primary colors according to the mapping parameters; and
displaying an image on a screen according to the new three-primary colors.

According to embodiments of a second aspect of the present disclosure, a color adjustment device is provided, and the device comprises:

a first obtaining module, configured to obtain a current color gamut mode of a pixel;
a transferring module, configured to transfer the current color gamut mode of the pixel to a preset color gamut mode, so as to obtain a blue component of the pixel in the preset color gamut mode; and
a regulation module, configured to perform a weakening regulation on the blue component of the pixel in the preset color gamut mode.

Optionally, the transferring module comprises:

a first correction sub-module, configured to perform a non-linear correction on the blue component of the pixel in the current color gamut mode according to preset formulas, so as to obtain the blue component of the pixel in the preset color gamut mode, in which the preset formulas comprise:

if $C_{sB}$ is greater than a first preset value, $C_{sB} = (1 + a)\cdot C_{IB}^{1/x}$; and
if $C_{sB}$ is less than or equal to the first preset value, $C_{sB} = b \cdot C_{IB}$;
where, $C_{IB}$ is the blue component of the pixel in the current color gamut mode, $0 \leq C_{IB} \leq 1$; $C_{sB}$ is the blue component of the pixel in the preset color gamut mode, $0 \leq C_{sB} \leq 1$; a is a first preset non-linear correction weight, b is a second preset non-linear correction weight; x is a first gamma value of the non-linear correction.

Optionally, the regulation module is configured to adjust the first preset non-linear correction weight a equal to about zero, if the blue component $C_{sB}$ of the pixel in the preset color gamut mode is greater than the first preset value.
Optionally, the transferring module comprises:

a second correction sub-module, configured to perform a non-linear correction respectively on a red component and a green component of the pixel in the current color gamut mode according to preset formulas, so as to obtain the red component and the green component of the pixel in the preset color gamut mode, in which the preset formulas comprise:

if $C_{sRG}$ is greater than the first preset value, $C_{sRG} = (1 + a')\cdot C_{IRG}^{1/y}$; and
if $C_{sRG}$ is less than or equal to the first preset value, $C_{sRG} = b' \cdot C_{IRG}$;
where, $C_{IRG}$ is the red component or green component of the pixel in the current color gamut mode, $0 \leq C_{IRG} < 1$; $C_{sRG}$ is the red component or green component of the pixel in the preset color gamut mode, $0 \leq C_{sRG} \leq 1$; a' is a third preset non-linear correction weight, b' is a fourth preset non-linear correction weight; y is a second gamma value of the non-linear correction, and $y < x$.

Optionally, the color adjustment device comprises:

a second obtaining module, configured to obtain mapping parameters for three-primary colors of the pixel;
a mapping module, configured to map current three-primary colors of the pixel to new three-primary colors according to the mapping parameters; and
a displaying module, configured to display an image on a screen according to the new three-primary colors.

According to embodiments of a third aspect of the present disclosure, a color adjustment device is provided, and the device comprises:

a processor; and

a memory, configured to store instructions executable by the processor;
in which, the processor is configured to:

obtain a current color gamut mode of a pixel;
transfer the current color gamut mode of the pixel to a preset color gamut mode, so as to obtain a blue component of the pixel in the preset color gamut mode; and
perform a weakening regulation on the blue component of the pixel in the preset color gamut mode.

According to embodiments of a fourth aspect of the present disclosure, a liquid crystal display is provided, and the liquid crystal display comprises:

a down polarizer on a backlight source;
an optical filter on the down polarizer, configured to filter out ultraviolet radiation, or to filter out a blue component of a pixel, or to filter out the ultraviolet radiation and the blue component of the pixel;
a liquid crystal layer on the optical filter; and
an up polarizer on the liquid crystal layer.

Optionally, the optical filter and the down polarizer are integrated.

The technical solutions provided in the present disclosure may have the following beneficial effects. The weakening or reduction of the blue components is realized via performing a regulation separately on the blue components in a color management process, and thus a screen user' eyesight is protected. Through adding the optical filter in the liquid crystal display, the ultraviolet radiation and/or the blue light is filtered out, without additional power consumption and further configuration.

It should be understood that, the above general description and following detail description are exemplary and explanatory, and shall not be construed to limit the present disclosure.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a schematic diagram of a liquid crystal display according to an example embodiment.

Fig. 2 is a flow chart of a color adjustment method according to an example embodiment.

Fig. 3 is a schematic diagram of a GAMMA correction curve according to an example embodiment.

Fig. 4 is a flow chart of a color adjustment method according to another example embodiment.

Fig. 5 is a block diagram of a color adjustment device according to an example embodiment.

Fig. 6 is a block diagram of a transferring module according to an example embodiment.

Fig. 7 is a block diagram of a transferring module according to another example embodiment.

Fig. 8 is a block diagram of a color adjustment device according to another example embodiment.

Fig. 9 is a block diagram of a device for color adjustment according to an example embodiment.

## DETAILED DESCRIPTION

Referring to the following descriptions and drawings, these and other aspects of the embodiments of the present disclosure will be apparent. In these descriptions and drawings, some specific approaches of the embodiments of the present disclosure are provided, so as to show some ways to perform the principle of the embodiments of the present disclosure, however it should be understood that the embodiment of the present disclosure is not limited thereby. Instead, the embodiments of the present disclosure include all the variants, modifications and their equivalents within the spirit and scope of the present disclosure as defined by the claims.

A wavelength of blue light belongs to a visible wavelength, and also is a channel of a blue component in a RGB color gamut. A visual experience will be affected by performing a regulation on light with this wavelength. Ultraviolet radiation belongs to invisible light, and if removed, clearly, display effect will not be influenced. In the present disclosure, a structure of the liquid crystal display is improved, so as to reduce an intensity of the ultraviolet radiation and an intensity of the blue light, thus protecting the eyesight.

In a typical structure of the liquid crystal display, the bottom layer is a backlight source, and a liquid crystal layer is located between two layers of polarizer. Liquid crystal molecules are controlled by voltages, so as to represent a bending effect from 0 to 90 degrees, thus realizing different light transmission.

Since the ultraviolet radiation has no influence on the display effect, an ultraviolet optical filter may be directly added in the structure design, so as to filter out the ultraviolet radiation.

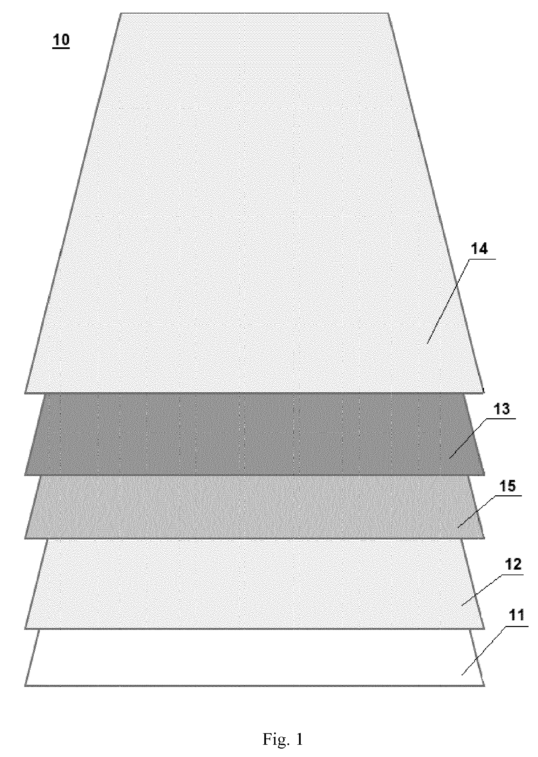

Fig. 1 is a schematic diagram of a liquid crystal display according to an example embodiment, as shown in Fig. 1, the liquid crystal display 10 comprises a down polarizer 12, a liquid crystal layer 13 and an up polarizer 14 on a backlight source 11, the liquid crystal layer 13 is located between the down polarizer 12 and the up polarizer 14, and the liquid crystal display 10 further comprises an optical filter 15 located between the liquid crystal layer 13 and the down polarizer 12.

The optical filter 15 is configured to filter out ultraviolet radiation, or to filter out blue components of pixels, or to filter out the ultraviolet radiation and the blue components of the pixels.

In the present disclosure, the ultraviolet radiation and/or the blue components of the pixels may be weakened by using the optical filter. Therefore, additional power consumption may be avoided via physical realization.

Optionally, the optical filter 15 and the down polarizer 12 are integrated. Since a new layer is added, the thickness of the liquid crystal display is increased. However, by improving the manufacturing process, both the function of polarizing light and the function of filtering out the ultraviolet radiation may be realized by one layer of polarizer.

In the present disclosure, the blue components of the pixels may also be reduced via color conversion. Since the visual experience will be affected by performing a regulation on the blue light, a regulation via software is more suitable to a universal mobile device.

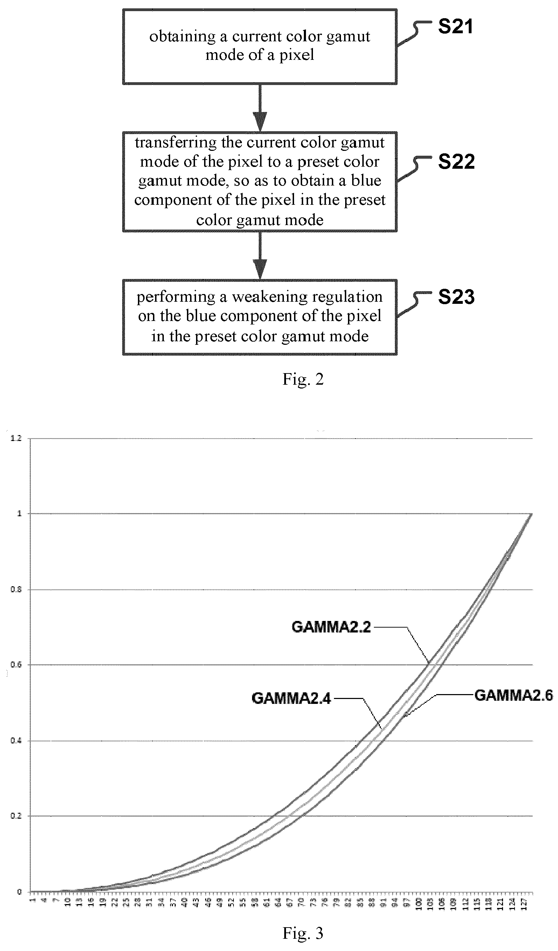

Fig. 2 is a flow chart of a color adjustment method according to an example embodiment. As shown in Fig. 2, the color adjustment method is used in a terminal, and comprises following steps.

In step S21, a current color gamut mode of a pixel is obtained.

In step S22, the current color gamut mode of the pixel is transferred to a preset color gamut mode, so as to obtain a blue component of the pixel in the preset color gamut mode.

In step S23, a weakening regulation is performed on the blue component of the pixel in the preset color gamut mode.

For example, in an image rendering process, it is required to transfer a color gamut mode of a pixel from a linear RGB color gamut mode to a sRGB (standard Red Green Blue) color gamut mode, such that a non-linear (GAMMA) correction may be performed on each color channel in the linear RGB color gamut mode, and a weakening regulation may be performed on the corrected blue component.

In the present embodiment, the blue light may be weakened by the above color adjustment method, thus protecting a screen user's eyesight. In addition, the function of adjusting screen colors may be started or closed by the user according to certain situations, which is flexible and convenient with a better user experience.

Optionally, step S22 comprises:

performing a non-linear correction on the blue component of the pixel in the current color gamut mode according to preset formulas, so as to obtain the blue component of the pixel in the preset color gamut mode, in which the preset formulas comprise:

if $C_{sB}$ is greater than a first preset value, $C_{sB}=(1+a) \cdot C_{IB}^{1/x}$; and

if $C_{sB}$ is less than or equal to the first preset value, $C_{sB}=b \cdot C_{IB}$;

where, $C_{IB}$ is the blue component of the pixel in the current color gamut mode, $0 \leq C_{IB} \leq 1$; $C_{sB}$ is the blue component of the pixel in the preset color gamut mode, $0 \leq C_{sB} \leq 1$; $a$ is a first preset non-linear correction weight, b is a second preset non-linear correction weight; x is a first gamma value of the non-linear correction.

For example, a range of the blue component in the linear RGB color gamut mode is [0, 1]. A GAMMA 2.2 correction (i.e., $x = 2.2$) is performed on the blue component of the pixel in the linear RGB color gamut mode:

if $C_{IB} \leq 0.00304$, $C_{sB} = 12.92 \cdot C_{IB}$; and
if $C_{IB} > 0.00304$, $C_{sB} = (1 + 0.055) \cdot C_{IB}^{1/2.2}$;

where, the range of $C_{sB}$ after the GAMMA 2.2 correction is [0, 1].

Optionally, step S23 comprises: if the blue component $C_{sB}$ of the pixel in the preset color gamut mode is greater than the first preset value, adjusting the first preset non-linear correction weight *a* to about zero.

For example, when the user starts an eye protection mode, a special process is performed on the blue channel, and by adjusting the first preset non-linear correction weight *a* to about zero (a ≈ 0), the blue component is weakened, thus realizing the effect of weakening blue light.

Optionally, the color adjustment method further comprises:

performing a non-linear correction respectively on a red component and a green component of the pixel in the current color gamut mode according to preset formulas, so as to obtain the red component and the green component of the pixel in the preset color gamut mode, in which the preset formulas comprise:

if $C_{sRG}$ is greater than the first preset value, $C_{sRG} = (1 + a') \cdot C_{IRG}^{1/y}$; and
if $C_{sRG}$ is less than or equal to the first preset value, $C_{sRG} = b' \cdot C_{IRG}$;
where, $C_{IRG}$ is the red component or green component of the pixel in the current color gamut mode, $0 \leq C_{IRG} < 1$; $C_{sRG}$ is the red component or green component of the pixel in the preset color gamut mode, $0 \leq C_{sRG} \leq 1$; *a'* is a third preset non-linear correction weight, b' is a fourth preset non-linear correction weight; *y* is a second gamma value of the non-linear correction, and *y < x.*

For example, the GAMMA 2.2 correction may be performed only on the red component and the green component, and a GAMMA 2.4 correction or a GAMMA 2.6 correction is performed on the blue component separately.

As shown in Fig. 3, according to the GAMMA correction curve, in the alternatives, the object of weakening the blue light may be realized by performing respective different GAMMA corrections on the red component, the green component and the blue component.

In the above method, the object of reducing the blue light is realized by weakening the B color channel. In addition, since the color of the pixel is formed by three-primary colors R, G and B in different proportions, color mixing may be realized by using new three-primary colors, i.e., by mapping the three-primary colors R, G, and B to a coordinate of the new three-primary colors C (Cyan), M (Magenta) and Y (Yellow), thus avoiding the damage of the blue light on eyes.

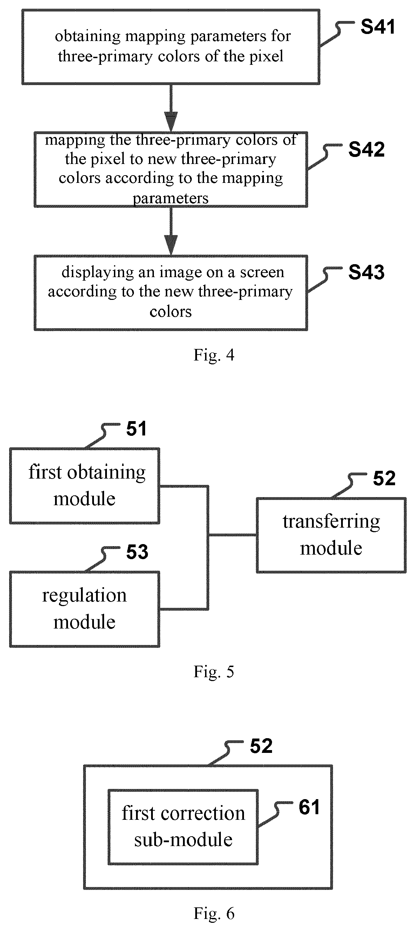

Fig. 4 is a flow chart of a color adjustment method according to another example embodiment, as shown in Fig. 4, the color adjustment method optionally comprises following steps.

In step S41, mapping parameters for three-primary colors of the pixel are obtained.

In step S42, the three-primary colors of the pixel are mapped to new three-primary colors according to the mapping parameters.

In step S43, an image is displayed on a screen according to the new three-primary colors.

For example, the three-primary colors of the pixel may be mapped according to a formula of

$$\begin{bmatrix} Y \\ M \\ C \end{bmatrix} = \begin{bmatrix} 0.5 & 0.5 & 0 \\ 0.5 & 0 & 0.5 \\ 0 & 0.5 & 0.5 \end{bmatrix} * \begin{bmatrix} R \\ G \\ B \end{bmatrix}.$$

In the alternative implementation, the blue light is reduced by performing the regulation on the three-primary colors of the pixel.

Fig. 5 is a block diagram of a color adjustment device according to an example embodiment. As shown in Fig. 5, the color adjustment device comprises a first obtaining module 51, a transferring module 52 and a regulation module 53.

The first obtaining module 51 is configured to obtain a current color gamut mode of a pixel.

The transferring module 52 is configured to transfer the current color gamut mode of the pixel to a preset color gamut mode, so as to obtain a blue component of the pixel in the preset color gamut mode.

The regulation module 53 is configured to perform a weakening regulation on the blue component of the pixel in the preset color gamut mode.

Fig. 6 is a block diagram of a transferring module according to an example embodiment. As shown in Fig. 6, the transferring module 52 optionally comprises a first correction sub-module 61.

The first correction sub-module 61 is configured to perform a non-linear correction on the blue component of the pixel in the current color gamut mode according to preset formulas, so as to obtain the blue component of the pixel in the preset color gamut mode, in which the preset formulas comprise:

if $C_{sB}$ is greater than a first preset value, $C_{sB} = (1 + a) \cdot C_{IB}^{1/x}$; and

if $C_{sB}$ is less than or equal to the first preset value, $C_{sB} = b \cdot C_{IB}$;

where, $C_{IB}$ is the blue component of the pixel in the current color gamut mode, $0 \le C_{IB} \le 1$; $C_{sB}$ is the blue component of the pixel in the preset color gamut mode, $0 \le C_{sB} \le 1$; $a$ is a first preset non-linear correction weight, b is a second preset non-linear correction weight; x is a first gamma value of the non-linear correction.

Optionally, the regulation module 53 is configured to adjust the first preset non-linear correction weight $a$ to about zero, if the blue component $C_{sB}$ of the pixel in the preset color gamut mode is greater than the first preset value.

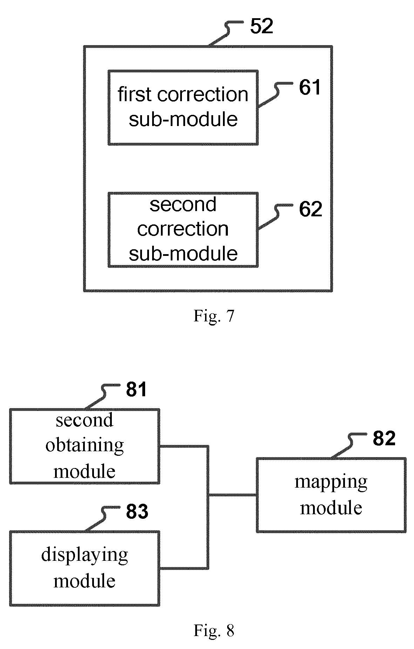

Fig. 7 is a block diagram of a transferring module according to another example embodiment. As shown in Fig. 7, the transferring module 52 optionally comprises a second correction sub-module 62.

The second correction sub-module 62 is configured to perform a non-linear correction respectively on a red component and a green component of the pixel in the current color gamut mode according to preset formulas, so as to obtain the red component and the green component of the pixel in the preset color gamut mode, in which the preset formulas comprise:

if $C_{sRG}$ is greater than the first preset value, $C_{sRG} = (1 + a') \cdot C_{IRG}^{1/y}$; and

if $C_{sRG}$ is less than or equal to the first preset value, $C_{sRG} = b' \cdot C_{IRG}$;

where, $C_{IRG}$ is the red component or green component of the pixel in the current color gamut mode, $0 \le C_{IRG} \le 1$; $C_{sRG}$ is the red component or green component of hte pixel in the preset color gamut mode, $0 \le C_{sRG} \le 1$; $a'$ is a third preset non-linear correction weight, $b'$ is a fourth preset non-linear correction weight; $y$ is a second gamma value of the non-linear correction, and $y < x$.

Fig. 8 is a block diagram of a color adjustment device according to another example embodiment. As shown in Fig. 8, the color adjustment device optionally comprises a second obtaining module 81, a mapping module 82 and a displaying module 83.

The second obtaining module 81 is configured to obtain mapping parameters for three-primary colors of the pixel.

The mapping module 82 is configured to map current three-primary colors of the pixel to new three-primary colors according to the mapping parameters.

The displaying module 83 is configured to display an image on a screen according to the new three-primary colors.

With respect to the devices in the above embodiments, the specific operation modes of individual modules therein have been described in detail in the embodiments regarding the method, which will not be elaborated herein.

The present disclosure also provides a color adjustment device comprising a processor and a memory configured to store instructions executable by the processor.

The processor is configured to: obtain a current color gamut mode of a pixel; transfer the current color gamut mode of the pixel to a preset color gamut mode, so as to obtain a blue component of the pixel in the preset color gamut mode; and perform a weakening regulation on the blue component of the pixel in the preset color gamut mode.

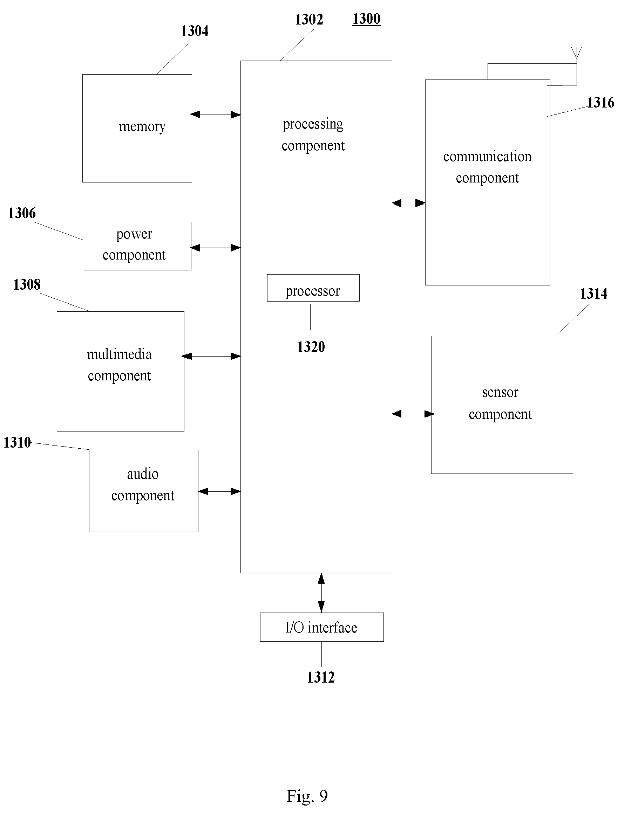

Fig. 9 is a block diagram of a device for color adjustment according to an example embodiment. For example, the device 1300 may be a mobile phone, a computer, a digital broadcasting terminal, a messaging device, a game console, a tablet device, a fitness equipment, a Personal Digital Assistant PDA, etc.

Referring to Fig. 9, the device 1300 may comprise the following one or more components: a processing component 1302, a memory 1304, a power component 1306, a multimedia component 1308, an audio component 1310, an Input/Output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may comprise one or more processors 1320 to execute instructions to perform all or part of the steps in the above described methods. Moreover, the processing component 1302 may comprise one or more modules which facilitate the interaction between the processing component 1302 and other components. For instance, the processing component 1302 may comprise a multimedia module to facilitate the interaction between the multimedia component 1308 and the processing component 1302.

The memory 1304 is configured to store various types of data to support the operation of the device 1300. Examples of such data comprise instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory

(EPROM), a programmable read-only memory (PROM), a read-only memory (ROM), a magnetic memory, a flash memory, a magnetic or optical disk.

The power component 1306 provides power to various components of the device 1300. The power component 1306 may comprise a power management system, one or more power sources, and any other components associated with the generation, management, and distribution of power in the device 1300.

The multimedia component 1308 comprises a screen providing an output interface between the color adjustment device 1300 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 1308 comprises a front camera and/or a rear camera. The front camera and the rear camera may receive external multimedia data while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 comprises a microphone (MIC) configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further comprises a speaker to output audio signals.

The I/O interface 1312 provides an interface for the processing component 1302 and peripheral interface modules, such as a keyboard, a click wheel, buttons, and the like. The buttons may comprise, but are not limited to, a home button, a volume button, a starting button, and a locking button.

The sensor component 1314 comprises one or more sensors to provide status assessments of various aspects of the color adjustment device 1300. For instance, the sensor component 1314 may detect an open/closed status of the device 1300 and relative positioning of components (e.g. the display and the keypad of the device 1300). The sensor component 1314 may also detect a change in position of the device 1300 or of a component in the device 1300, a presence or absence of user contact with the device 1300, an orientation or an acceleration/deceleration of the color adjustment device 1300, and a change in temperature of the device 1300. The sensor component 1314 may comprise a proximity sensor configured to detect the presence of nearby objects without any physical contact. The sensor component 1314 may also comprise a light sensor, such as a CMOS or CCD image sensor, for use in imaging applications. In some embodiments, the sensor component 1314 may also comprise an accelerometer sensor, a gyroscope sensor, a magnetic sensor, a pressure sensor, or a temperature sensor.

The communication component 1316 is configured to facilitate wired or wireless communication between the device 1300 and other devices. The device 1300 can access a wireless network based on a communication standard, such as WIFI, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer readable storage medium comprising instructions, such as the memory 1304 comprising instructions. The above instructions are executable by the processor 1320 in the device 1300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium comprises instructions, which when executed by a processor of a mobile terminal, causes the mobile terminal to perform the method(s) described above.

Where functional modules are referred to in apparatus embodiments for carrying out the various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and comprising such departures from the present disclosure as come within known or customary practice in the art.

**Claims**

1. A color adjustment method for a liquid crystal display, the method comprising:

   obtaining a current color gamut mode of a pixel;
   transferring the current color gamut mode of the pixel to a preset color gamut mode, so as to obtain a blue component of the pixel in the preset color gamut mode; and
   performing a reduction of the intensity of the blue component of the pixel in the preset color gamut mode.

2. The color adjustment method according to claim 1, wherein, transferring the current color gamut mode of the pixel to the preset color gamut mode so as to obtain the blue component of the pixel in the preset color gamut mode comprises:

   performing a non-linear correction on the blue component of the pixel in the current color gamut mode according to preset formulas, so as to obtain the blue component of the pixel in the preset color gamut mode, in which the preset formulas comprise:

   if $C_{sB}$ is greater than a first preset value, $C_{sB} = (1 + a) \cdot C_{IB}^{1/x}$; and
   if $C_{sB}$ is less than or equal to the first preset value, $C_{sB} = b \cdot C_{IB}$ ;
   where, $C_{IB}$ is the blue component of the pixel in the current color gamut mode, $0 \leq C_{IB} \leq 1$; $C_{sB}$ is the blue component of the pixel in the preset color gamut mode, $0 \leq C_{sB} \leq 1$; $a$ is a first preset non-linear correction weight, b is a second preset non-linear correction weight; x is a first gamma value of the non-linear correction.

3. The color adjustment method according to claim 2, wherein, performing the reduction of the intensity of the intensity of the blue component of the pixel in the preset color gamut mode comprises:

   if the blue component $C_{sB}$ of the pixel in the preset color gamut mode is greater than the first preset value, adjusting the first preset non-linear correction weight $a$ to about zero.

4. The color adjustment method according to claim 2 or 3, further comprising:

   performing a non-linear correction respectively on a red component and a green component of the pixel in the current color gamut mode according to preset formulas, so as to obtain the red component and the green component of the pixel in the preset color gamut mode, in which the preset formulas comprise:

   if $C_{sRG}$ is greater than the first preset value, $C_{sRG} = (1 + a') \cdot C_{IRG}^{1/y}$; and
   if $C_{sRG}$ is less than or equal to the first preset value, $C_{sRG} = b' \cdot C_{IRG}$;
   where, $C_{IRG}$ is the red component or green component of the pixel in the current color gamut mode, $0 \leq C_{IRG} \leq 1$; $C_{sRG}$ is the red component or green component of the pixel in the preset color gamut mode, $0 \leq C_{sRG} \leq 1$; $a'$ is a third preset non-linear correction weight, b' is a fourth preset non-linear correction weight; $y$ is a second gamma value of the non-linear correction, and $y < x$.

5. The color adjustment method according to any preceding claim, further comprising:

   obtaining mapping parameters for three-primary colors of the pixel;
   mapping the three-primary colors of the pixel to new three-primary colors according to the mapping parameters; and
   displaying an image on a screen according to the new three-primary colors.

6. A color adjustment device for a liquid crystal display, comprising:

   a first obtaining module (51), configured to obtain a current color gamut mode of a pixel;
   a transferring module (52), configured to transfer the current color gamut mode of the pixel to a preset color gamut mode, so as to obtain a blue component of the pixel in the preset color gamut mode; and
   a regulation module (53), configured to perform a reduction of the intensity of the blue component of the pixel in the preset color gamut mode.

7. The color adjustment device according to claim 6, wherein, the transferring module (52) comprises:

a first correction sub-module (61), configured to perform a non-linear correction on the blue component of the pixel in the current color gamut mode according to preset formulas, so as to obtain the blue component of the pixel in the preset color gamut mode, in which the preset formulas comprise:

if $C_{sB}$ is greater than a first preset value, $C_{sB} = (1 + a) \cdot C_{IB}^{1/x}$; and
if $C_{sB}$ is less than or equal to the first preset value, $C_{sB} = b \cdot C_{IB}$;
where, $C_{IB}$ is the blue component of the pixel in the current color gamut mode, $0 \le C_{IB} \le 1$; $C_{sB}$ is the blue component of the pixel in the preset color gamut mode, $0 \le C_{sB} \le 1$; $a$ is a first preset non-linear correction weight, b is a second preset non-linear correction weight; x is a first gamma value of the non-linear correction.

8. The color adjustment device according to claim 7, wherein, the regulation module (52) is configured to adjust the first preset non-linear correction weight $a$ equal to about zero, if the blue component $C_{sB}$ of the pixel in the preset color gamut mode is greater than the first preset value.

9. The color adjustment device according to claim 7 or 8, wherein, the transferring module (52) comprises:

a second correction sub-module (62), configured to perform a non-linear correction respectively on a red component and a green component of the pixel in the current color gamut mode according to preset formulas, so as to obtain the red component and the green component of the pixel in the preset color gamut mode, in which the preset formulas comprise:

if $C_{sRG}$ is greater than the first preset value, $C_{sRG} = (1 + a') \cdot C_{IRG}^{1/y}$; and
if $C_{sRG}$ is less than or equal to the first preset value, $C_{sRG} = b' \cdot C_{IRG}$;
where, $C_{IRG}$ is the red component or green component of the pixel in the current color gamut mode, $0 \le C_{IRG} < 1$; $C_{sRG}$ is the red component or green component of the pixel in the preset color gamut mode, $0 \le C_{sRG} \le 1$; $a'$ is a third preset non-linear correction weight, $b'$ is a fourth preset non-linear correction weight; $y$ is a second gamma value of the non-linear correction, and $y < x$.

10. The color adjustment device according to any of claims 6 to 9, further comprising:

a second obtaining module (81), configured to obtain mapping parameters for three-primary colors of the pixel;
a mapping module (82), configured to map current three-primary colors of the pixel to new three-primary colors according to the mapping parameters; and
a displaying module (83), configured to display an image on a screen according to the new three-primary colors.

11. A color adjustment device for a liquid crystal display, comprising:

a processor; and
a memory, configured to store instructions executable by the processor;
wherein, the processor is configured to perform the method of any of claims 1 to 5.

12. A computer program that when executed on a device having a liquid crystal display causes it to carry out the method of any of claims 1 to 5.

13. A liquid crystal display (10), comprising:

a down polarizer (12) on a backlight source (11);
an optical filter (15) on the down polarizer (12), configured to filter out ultraviolet radiation, or to filter out blue components of pixels, or to filter out the ultraviolet radiation and the blue components of the pixels;
a liquid crystal layer (13) on the optical filter (15); and
an up polarizer (14) on the liquid crystal layer (13).

14. The liquid crystal display (10) according to claim 12, wherein, the optical filter (15) and the down polarizer (12) are integrated.

Fig. 1

```
┌─────────────────────────────┐
│  obtaining a current color  │    ╭─ S21
│   gamut mode of a pixel     │
└─────────────────────────────┘
              │
              ▼
┌─────────────────────────────┐
│ transferring the current    │
│ color gamut mode of the     │    ╭─ S22
│ pixel to a preset color     │
│ gamut mode, so as to obtain │
│ a blue component of the     │
│ pixel in the preset color   │
│ gamut mode                  │
└─────────────────────────────┘
              │
              ▼
┌─────────────────────────────┐
│ performing a weakening      │
│ regulation on the blue      │    ╭─ S23
│ component of the pixel in   │
│ the preset color gamut mode │
└─────────────────────────────┘
```

Fig. 2

Fig. 3

obtaining mapping parameters for three-primary colors of the pixel — S41

mapping the three-primary colors of the pixel to new three-primary colors according to the mapping parameters — S42

displaying an image on a screen according to the new three-primary colors — S43

Fig. 4

51

first obtaining module

52

transferring module

53

regulation module

Fig. 5

52

first correction sub-module — 61

Fig. 6

first correction sub-module — 61

second correction sub-module — 62

— 52

Fig. 7

second obtaining module — 81

displaying module — 83

mapping module — 82

Fig. 8

1304
1302    1300

memory    processing
component

communication
component

1316

1306

power
component

processor

1320

1308

multimedia
component

1314

sensor
component

1310

audio
component

I/O interface

1312

Fig. 9